(19) Europäisches Patentamt
European Patent Office
Office européen des brevets

(11) Veröffentlichungsnummer: **0 198 796**
**B1**

(12) **EUROPÄISCHE PATENTSCHRIFT**

(45) Veröffentlichungstag der Patentschrift: **05.12.90**

(51) Int. Cl.⁵: **C09B 62/085**, D06P 1/382

(21) Anmeldenummer: **86810144.5**

(22) Anmeldetag: **26.03.86**

(54) **Monoazofarbstoffe, deren Herstellung und Verwendung.**

(30) Priorität: **03.04.85 CH 1435/85**

(43) Veröffentlichungstag der Anmeldung:
**22.10.86 Patentblatt 86/43**

(45) Bekanntmachung des Hinweises auf die Patenterteilung:
**05.12.90 Patentblatt 90/49**

(84) Benannte Vertragsstaaten:
**BE CH DE FR GB LI**

(56) Entgegenhaltungen:
**FR-A- 1 106 359**
**FR-A- 1 327 016**
**FR-A- 2 202 089**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Klybeckstrasse 141, CH-4002 Basel(CH)**

(72) Erfinder: **Hurter, Rudolf, Laufenburgerstrasse 10/3, CH-4058 Basel(CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

## Beschreibung

Die vorliegende Erfindung betrifft neue Monoazofarbstoffe, Verfahren zu deren Herstellung und die Verwendung dieser Farbstoffe zum Färben oder Bedrucken von Materialien faseriger Strukturen, insbesondere Textilmaterialien.

Die der vorliegenden Erfindung zugrunde liegende Aufgabe war es, neue Monoazofarbstoffe zu finden, die zum Färben und Bedrucken von insbesondere natürlichen und synthetischen Polyamidfasermaterialien aus wässrigem Bad geeignet sind, die ferner Nuancen im Gelb-Bereich haben, und die ausser guten Echtheitseigenschaften, wie z.B. Lichtechtheit, Nassechtheiten und Formaldehydbeständigkeit, insbesondere sehr gute Wasserlöslichkeit und hohe Lösungsstabilität in Klotz-flotten bei verschiedenen pH-Werten sowie gute Druckpastenstabilität aufweisen.

Diese Aufgabe wird mit den erfindungsgemässen Monoazofarbstoffen der Formel (1) gelöst.

Gegenstand der vorliegenden Erfindung sind somit Monoazofarbstoffe der Formel

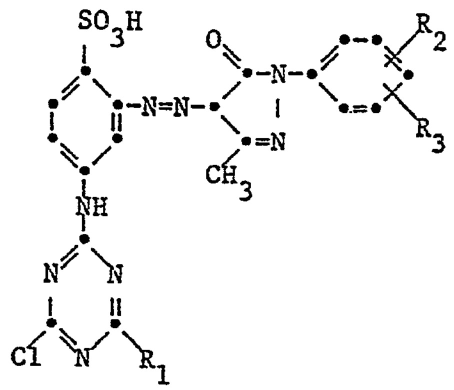

(1),

worin $R_1$ N-Aethylanilino oder durch $C_{2-5}$-Alkanoylamino substituiertes Anilino, $R_2$ Wasserstoff oder $C_{1-4}$-Alkyl und $R_3$ Halogen oder $C_{1-4}$-Alkyl ist.

Bedeutet $R_1$ durch $C_{2-5}$-Alkanoylamino substituiertes Anilino, so handelt es sich um einen Anilinrest, der in 2-, 3- oder insbesondere 4-Stellung z.B. durch Acetylamino, Propionylamino, Butyrylamino, Isobutyrylamino, Valerylamino, Isovalerylamino oder Pivaloylamino substituiert ist; bevorzugt ist der Propionylaminorest.

Bedeuten $R_2$ und $R_3$ $C_{1-4}$-Alkyl, so kommt unabhängig voneinander Methyl, Aethyl, Propyl, Isopropyl, n-Butyl, sek.Butyl, Isobutyl oder tert.- Butyl in Betracht.

Bedeutet $R_3$ Halogen, so kommt vorzugsweise Fluor, Chlor und Brom in Betracht.

Bevorzugt sind Monoazofarbstoffe der Formel (1), worin $R_1$

a) N-Aethylanilino oder

b) durch $C_{2-4}$-Alkanoylamino substituiertes Anilino ist.

Besonders bevorzugt sind Monoazofarbstoffe der Formel (1), worin

c) $R_2$ Wasserstoff und $R_3$ Chlor, Methyl oder Aethyl, oder

d) $R_2$ Methyl und $R_3$ Chlor, Methyl oder Aethyl ist.

Die ganz besonders bevorzugten Monoazofarbstoffe entsprechen der Formel

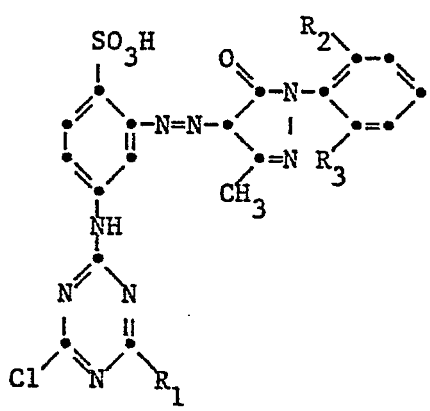

(2),

worin $R_1$, $R_2$ und $R_3$ die unter Formel (1) angegebenen Bedeutungen haben.

Insbesondere bevorzugt sind Monoazofarbstoffe der Formel (2), worin $R_1$ N-Aethylanilino oder 4-Propionylaminoanilino, $R_2$ Wasserstoff oder Methyl und $R_3$ Chlor, Methyl oder Aethyl ist; und ganz besonders die Monoazofarbstoffe der Formeln

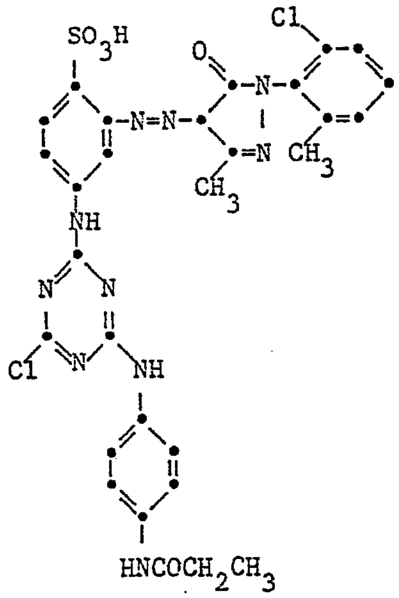

(3) und

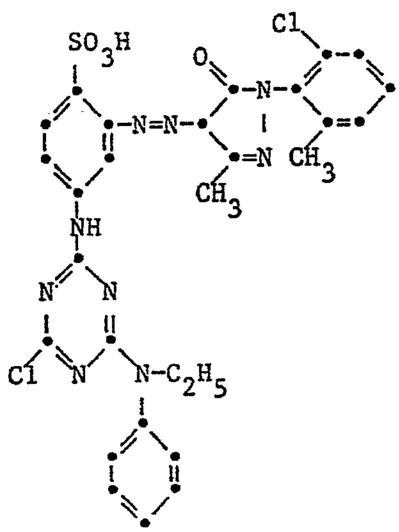

(4)

Gegenstand der Erfindung ist ferner ein Verfahren zur Herstellung der Monoazofarbstoffe der Formel (1). Das Verfahren ist dadurch gekennzeichnet, dass man in beliebiger Reihenfolge 2,4,6-Trichlor-1,3,5-triazin, ein Amin der Formel

$$H - R_1 \qquad (5),$$

1,3-Diaminobenzol-4-sulfonsäure und ein Pyrazolon der Formel

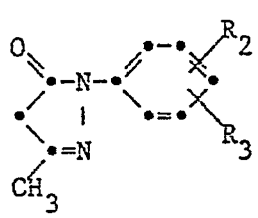

(6)

kondensiert, diazotiert und kuppelt, wobei die Symbole $R_1$, $R_2$ und $R_3$ die unter Formel (1) angegebenen Bedeutungen haben.

Da die einzelnen oben angegebenen Verfahrensschritte, nämlich Kondensation, Diazotiertung und Kupplung, in unterschiedlicher Reihenfolge, gegenbenenfalls teilweise auch gleichzeitig, ausgeführt werden können, sind verschiedene Verfahrensweisen möglich. Die für jede Teilreaktion zu verwendenden Ausgangsstoffe ergeben sich aus Formel (1). Im allgemeinen führt man die Umsetzung schrittweise nacheinander aus, wobei die Reihenfolge der einfachen Reaktionen zwischen den einzelnen Reaktionskomponenten der Formeln (5) und (6), 2,4,6-Trichlor-1,3,5-triazin und der 1,3-Diaminobenzol-4-sulfonsäure frei gewählt werden kann.

Bevorzugte Verfahrensweisen sind dadurch gekennzeichnet, dass man

a) 2,4,6-Trichlor-1,3,5-triazin in äquimolarer Menge mit einem Amin der Formel (5) und 1,3-Diaminobenzol-4-sulfonsäure kondensiert, das erhaltene Kondensationsprodukt diazotiert und auf ein Pyrazolon der Formel (6) kuppelt.

b) ein Dichlor-s-triazin der Formel

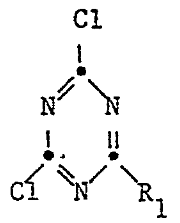

(7),

worin $R_1$ die unter Formel (1) angegebene Bedeutung hat, mit 1,3-Diaminobenzol-4-sulfonsäure kondensiert, das erhaltene Kondensationsprodukt diazotiert und auf ein Pyrazolon der Formel (6) kuppelt.

c) 1,3-Diaminobenzol-4-sulfonsäure diazotiert und auf ein Pyrazolon der Formel (6) kuppelt und die erhaltene Monoazoverbindung mit einem Dichlor-s-triazin der Formel (7) kondensiert.

Die Diazotierung der 1,3-Diaminobenzol-4-sulfonsäure erfolgt in der Regel durch Einwirkung salpetriger Säure in wässrig-mineralsaurer Lösung bei tiefer Temperatur, die Kupplung auf die Pyrazolone der Formel (6) bei schwach sauren neutalen bis schwach alkalischen pH-Werten.

Die Kondensation von 2,4,6-Trichlor-1,3,5-triazin mit einem Amin der Formel (5) und 1,3-Diaminobenzol-4-sulfonsäure bzw. die Kondensation der Dichlor-s-triazine der Formel (7) mit 1,3-Diaminobenzol-4-sulfonsäure erfolgt vorzugsweise in wässriger Lösung oder Suspension, bei neidriger Temperatur und bei schwach saurem, neutralem bis schwach alkalischem pH-Wert. Vorteilhaft wird der bei der Kondensation freiwerdende Chlorwasserstoff laufend durch Zugabe wässriger Alkalihydroxyde, -carbonate oder -bicarbonate neutralisiert.

In manchen Fällen verwendet man zweckmässigerweise für die Kupplungen, bei welchen 1,3-Diaminobenzol-4-sulfonsäure als Diazokomponente verwendet wird, nicht diese selbst, sondern statt dessen 1-Acylamino-3-amino-benzol-4-sulfonsäure, z.B. 1-Acetylamino-3-aminobenzol-4- sulfonsäure, aus der man nach vollzogener Kupplung die Acetylgruppe durch Verseifung abspaltet, bevor man weiterkondensiert. Ferner kann man als Diazokomponente auch die Nitro-aminoverbindung, 1-Nitro-3-aminobenzol-4-sulfonsäure, verwenden und die Nitrogruppe nach der Kupplung mit Schwefelnatrium oder Natriumsulfhydrat zur Aminogruppe reduzieren.

Dichlor-s-triazine der Formel (7) sind bekannt. Sie werden hergestellt durch Kondensation des 2,4,6-Trichlor-s-triazins (Cyanurchlorid) im molaren Verhältnis 1:1 mit N-Aethylanilin oder einem durch $C_{2-5}$-Alkanoylamino sustituierten Anilin.

Vorzugsweise verwendet man in dem erfindungsgemässen Verfahren Amine der Formel (5) bzw. Dichlor-s-triazine der Formel (7), worin $R_1$

a) N-Aethylanilino oder
b) durch $C_{2-4}$-Alkanoylamino sustituiertes Anilino ist.

Insbesondere verwendet man in dem erfindungsgemässen Verfahren Pyrazolone der Formel (6), worin

c) $R_2$ Wasserstoff und $R_3$ Chlor, Methyl oder Aethyl, oder
d) $R_2$ Methyl und $R_3$ Chlor, Methyl oder Aethyl ist.

Die bevorzugten Monoazofarbstoffe der Formel (2) werden hergestellt, indem man in dem erfindungsgemässen Verfahren Pyrazolone der Formel

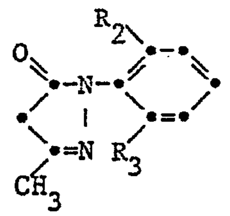

(8)

verwendet, worin $R_2$ und $R_3$ die unter Formel (1) angegebenen Bedeutungen haben.

Insbesondere verwendet man Amine der Formel (5) bzw. Dichlor-s-triazine der Formel (7), worin $R_1$ N-Aethylanilino oder 4-Propionylaminoanilino ist, und Pyrazolone der Formel (8), worin $R_2$ Wasserstoff oder Methyl und $R_3$ Chlor, Methyl oder Aethyl ist.

Die besonders interessanten Monoazofarbstoffe der Formeln (3) und (4) werden hergestellt, indem man das sekundäre Kondensationsprodukt aus 2,4,6-Trichlor-1,3,5-triazin, der äquimolaren Menge 1,3-Diaminobenzol-4-sulfonsäure und der äquimolaren Menge N-Aethylanilin oder 4-Propionylaminoanilin diazotiert und auf 1-(2'-Chlor-6'-methylphenyl) -3-methyl-5-pyrazolon kuppelt.

Als Ausgangsstoffe zur Herstellung der Monoazofarbstoffe der Formel (1) seien z.B. genannt:

Amine der Formel (5)

N-Aethylanilin, 2-, 3- oder 4-Acetylaminoanilin, 2-, 3-, oder 4-Propionylaminoanilin, 2-, 3- oder 4-Butyrylaminoanilin, 2-, 3- oder 4-Isobutyrylaminoanilin, 2-, 3- oder 4-Valerylaminoanilin, 2-, 3- oder 4-Isovalerylaminoanilin, 2-, 3- oder 4-Pivaloylaminoanilin.

2,4,6-Trichlor-1,3,5-triazin

Dichlor-s-triazine der Formel (7)

2,4-Dichlor-6-N-äthyl-phenylamino-, -6-(2'-, 3'- oder 4'-acetylaminoanilino)-, -6-(2'-, 3'- oder 4'-propionylaminoanilino)-, -6-(2'-, 3'- oder 4'-butryrylaminoanilino)-, -6-(2'-, 3'-, oder 4' -isobutyrylaminoalino)-, -6-(2'-, 3'- oder 4' -valerylaminoanilino)-, -6-(2'-, 3'- oder 4' -isovalerylaminoanilino)-, -6-(2'-, 3'- oder 4' -pivaloylaminoanilino)-1,3,5-triazin.

Diazokomponenten

1,3-Diaminobenzol-4-sulfonsäure, 1-Acetylamino-3-aminobenzol-4-sulfonsäure, 1-Nitro-3-aminobenzol-4-sulfonsäure.

Pyrazolone der Formel (6)

1-(2'-, 3'- oder 4' -Chlorphenyl)-3-methyl-5-pyrazolon,
1-(2'-, 3'- oder 4' -Methylphenyl)-3-methyl-5-pyrazolon,
1-(2'-, 3'- oder 4' -Aethylphenyl)-3-methyl-5-pyrazolon,
1-(2'-, 3'- oder 4' -Propylphenyl)-3-methyl-5-pyrazolon,
1-(2'-,3'- oder 4' -Isopropylphenyl)-3-methyl-5-pyrazolon,
1-(2'-, 3'- oder 4' -Butylphenyl)-3-methyl-5-pyrazolon,
1-(2'-Chlor-6'-methylphenyl)-3-methyl-5-pyrazolon,
1-(2'-Chlor-6'-aethylphenyl)-3-methyl-5-pyrazolon,
1-(2'-, 6'-Dimethylphenyl)-3-methyl-5-pyrazolon,
1-(2'-Methyl-6'-äthylphenyl)-3-methyl-5-pyrazolon.

Die Monoazofarbstoffe der Formel (1) liegen entweder in der Form ihrer freien Sulfonsäure oder vorzugsweise als deren Salze vor. Als Salze kommen beispielsweise die Alkali-, Erdalkali- oder Ammoniumsalze oder die Salze eines organischen Amins in Betracht. Als Beispiele seien die Natrium-, Lithium-, Kalium-, oder Ammoniumsalze oder das Salz des Triäthanolamins genannt.

Die Azofarbstoffe der Formel (1) können isoliert und zu brauchbaren, trockenen Färbepräparaten verarbeitet werden. Die Isolierung erfolgt vorzugsweise bei möglichst niedrigen Temperaturen durch Aussalzen und Filtrieren oder durch Umkehrosmose oder Ultrafiltration. Die filtrierten Farbstoffe können gegebenenfalls nach Zugabe von Coupagemitteln und/oder Puffermitteln, z.B. nach Zugabe eines Gemisches gleicher Teile Mono- und Dinatriumphosphat, getrocknet werden; vorzugsweise wird die Trocknung bei nicht zu hohen Temperaturen und unter vermindertem Druck vorgenommen. Durch Zerstäubungstrocknung des ganzen Herstellungsgemisches kann man in gewissen Fällen die erfindungsgemässen trockenen Präparate direkt, d.h. ohne Zwischenisolierung der Farbstoffe herstellen.

Die Azofarbstoffe der Formel (1) sind neu. Sie ergeben Färbungen mit guten Nass- und Lichtechtheiten. Die Färbungen sind ätzbar. Ausser der überraschend guten Wasserlöslichkeit zeichnen sich die

Azofarbstoffe der Formel (1) durch hohe Lösungsstabilität in Klotzflotten auch bei verschiedenen pH-Werten sowie sehr gute Druckpastenstabilität aus.

Aus der US-A 2 795 576 sind ähnliche Farbstoffe bekannt. Diese weisen jedoch nicht alle guten Eigenschaften der erfindungsgemäßen Farbstoffe auf.

Die Azofarbstoffe der Formel (1) eignen sich zum Färben und Bedrucken der verschiedensten Materialien, wie z.B. stickstoffgruppenhaltigen oder hydroxygruppenhaltigen Materialien, wie z.B. Baumwolle, insbesondere aber von Seide, Wolle oder Superpolyamidfasern. Sie eignen sich sowohl für das Ausziehverfahren als auch zum Färben nach dem Foulardfärbeverfahren, wonach die Ware mit wässrigen und gegebenenfalls auch salzhaltigen Farbstofflösungen imprägniert wird.

Sie eignen sich auch zum Bedrucken von stickstoffhaltigen Fasern, z.B. von Wolle, Superpolyamiden oder von Seide oder Wolle enthaltenden Mischgeweben.

Es empfiehlt sich, die Färbungen und Drucke einem gründlichen Spülen mit kaltem und heissem Wasser, gegebenenfalls unter Zusatz eines dispergierend wirkenden und die Diffusion der nicht fixierten Anteile fördernden Mittels zu unterwerfen.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

Beispiel 1: 71,5 g des sekundären Kondensationsproduktes aus 1 Mol Cyanurchlorid, 1 Mol N-Aethylanilin und 1 Mol 1,3-Diaminobenzol-4-sulfonsäure werden in 425 ml Wasser unter Zugabe von 16,5 ml Natronlauge (30%ig) warm gelöst. Nach Zugabe von 42,5 ml Natriumnitritlösung (4 n) verdünnt man mit 425 g Eis und giesst 153 ml Naphthalin- 1-sulfonsäure als ca. 3,8 normale Lösung hinzu. Die erhaltene Diazosuspension lässt man während 2-3 Stunden ausdiazotieren. Ein eventuell noch vorhandener Nitritüberschuss wird mit Sulfaminsäure zerstört.

37,8 g 1-(2'-Methyl-6'-chlor-phenyl)-3-methyl-5-pyrazolon werden in 425 ml Wasser unter Zugabe von 17 ml Natronlauge 30% heiss gelöst. Nach dem Abkühlen auf 2° fügt man die oben hergestellte Diazosuspension hinzu und hält den pH-Wert mit Natronlauge um 8,5. Nach beendigter Kupplung wird filtriert. Das Pressgut wird in 300 ml Kochsalzlösung unter Zusatz von 50 ml Aethanol angeschlämmt, filtriert, gewaschen und im Vakuum bei 50-60° getrocknet.

Man erhält 121 g Farbstoff der Formel

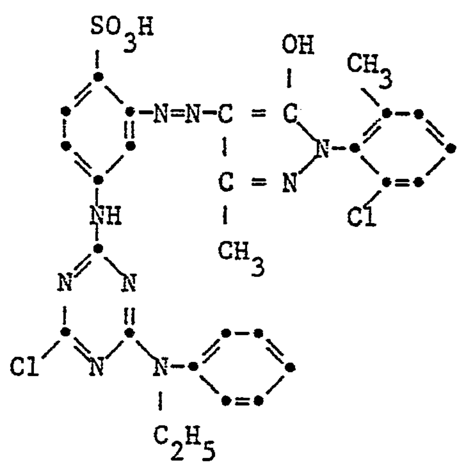

Der Farbstoff stellt ein gelbes Pulver dar, das Wolle und Polyamidfasern aus neutralem oder schwach essigsaurem Bade gleichmässig grünstichig gelb färbt.

Wenn man wie in Beispiel 1 angegeben verfährt, jedoch als Diazokomponente und als Kupplungskomponente die in der nachfolgenden Tabelle aufgeführten Verbindungen einsetzt, so erhält man ebenfalls wasserlösliche Farbstoffe, die Polyamid in der angegebenen Nuance mit guten Eigenschaften anfärben.

| Beispiel | Diazokomponente | Kupplungskomponente | Nuance |
|---|---|---|---|
| 2 | 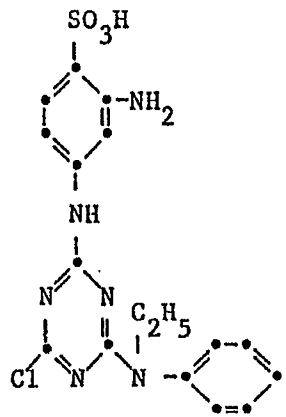 | 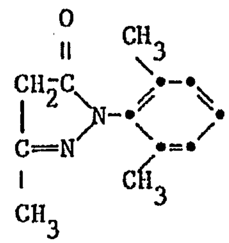 | grünstichig gelb |
| 3 | 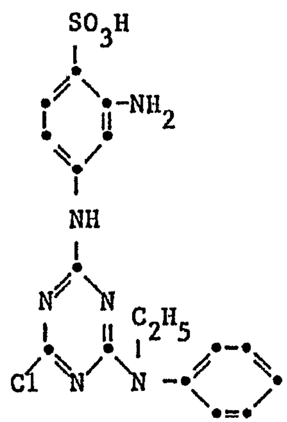 | 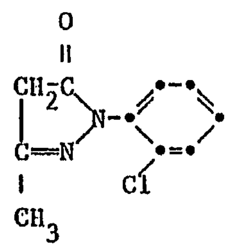 | grünstichig gelb |

| Beispiel | Diazokomponente | Kupplungskomponente | Nuance |
|---|---|---|---|
| 4 | 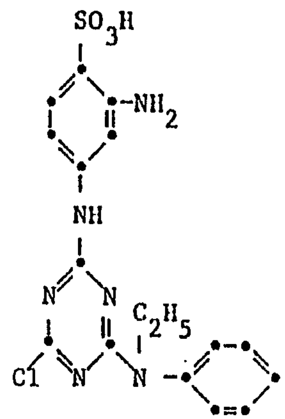 | 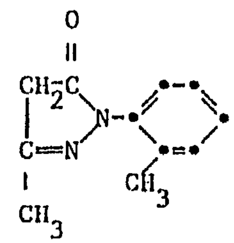 | grünstichig gelb |
| 5 | 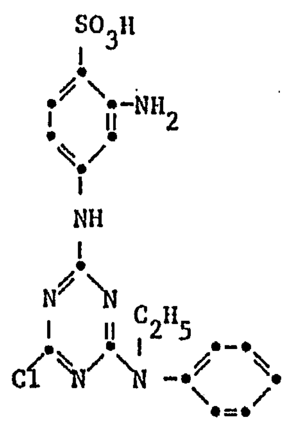 | 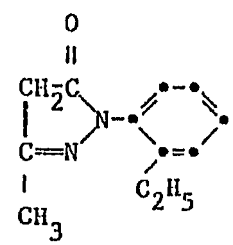 | grünstichig gelb |

| Beispiel | Diazokomponente | Kupplungskomponente | Nuance |
|---|---|---|---|
| 6 | 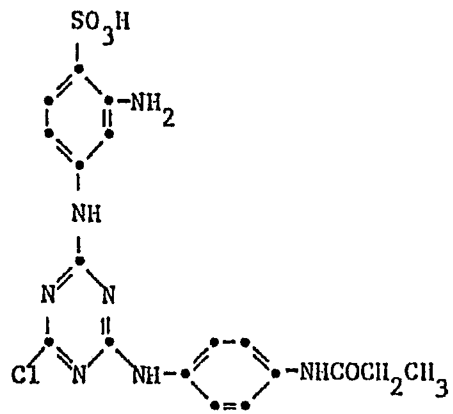 | 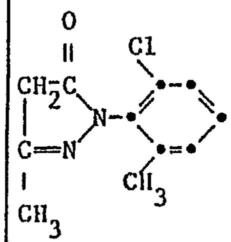 | grünstichig gelb |
| 7 | 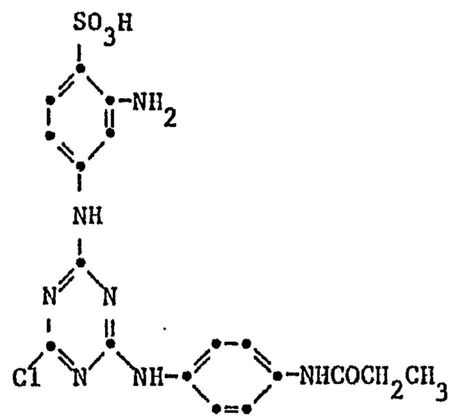 | 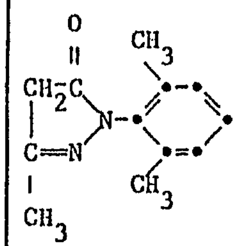 | grünstichig gelb |

| Beispiel | Diazokomponente | Kupplungskomponente | Nuance |
|---|---|---|---|
| 8 | 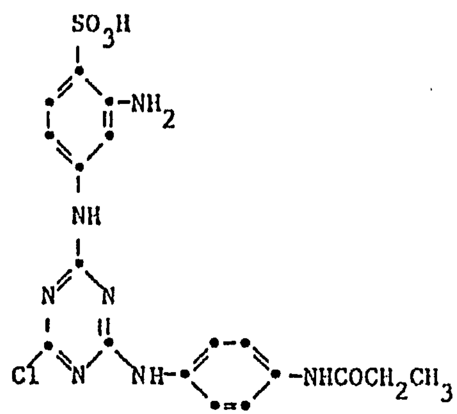 | 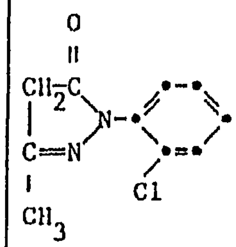 | grünstichig gelb |
| 9 | 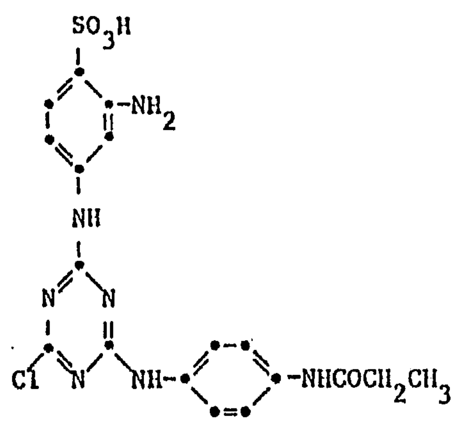 | 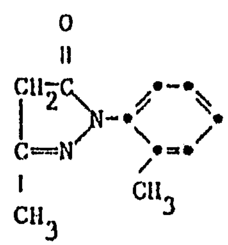 | grünstichig gelb |

| Beispiel | Diazokomponente | Kupplungskomponente | Nuance |
|---|---|---|---|
| 10 | 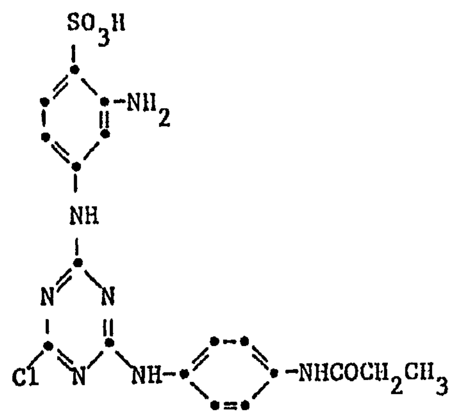 | 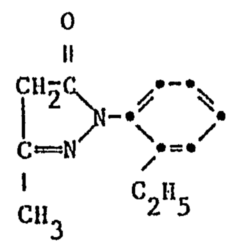 | grünstichig gelb |

Gegenüber dem bekannten Farbstoff aus der US-PS 2,795,576 in Tabellenbeispiel 1 der Formel

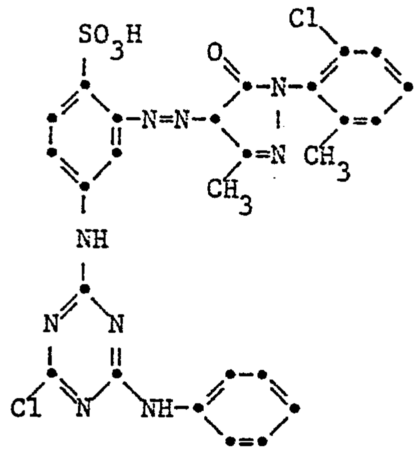

zeigen die erfindungsgemässen Monoazofarbstoffe der obigen Beispiele 1 bis 10 eine bessere Wasserlöslichkeit, bessere Lösungsstabilität von Klotzflotten bei pH-Werten von 3.5, 4 und 7 sowie eine bessere Druckpastenstabilität unter Zusatz von verschiedenen Verdickungsmitteln.

Färbevorschrift I:

Man färbt 10 Teile eines Trikot aus Polyamid 6.6 in 500 Teilen einer wässerigen Flotte, die 1 g/l Mononatriumphosphat enthält und mit Dinatriumphosphat auf pH 6 gestellt wird. Der Anteil des Farbstoffes gemäss Beispiel 1 beträgt 0,8%, bezogen auf das Fasergewicht. Die Färbedauer bei einer Temperatur von 98° beträgt 30 bis 90 Minuten. Das gefärbte Helancastück wird anschliessend herausgenommen und wie üblich gewaschen und getrocknet. Man erhält ein grünstichig gelb gefärbtes Helancastück, das eine reine Nuance und sehr gute Gesamtechtheiten aufweist.

Färbevorschrift II: 100 Teile Wollstrickgarn werden bei 50° in ein Färbebad eingerührt, das auf 4000 Teile Wasser 0,9 Teile des Farbstoffes des Tabellenbeispiels 6 und 5 Teile Natriumsulfat enthält und mit Essigsäure 80% auf pH 5,5 gestellt wurde. Die Flotte wird im Verlaufe von 45 Minuten zum Sieden gebracht und während weiteren 45 Minuten bei Kochtemperatur gehalten. Darauf wird das Färbegut herausgenommen, mit kaltem Wasser gründlich gespült und getrocknet. Man erhält eine grünstichig gelbe Wollfärbung mit guten Echtheitseigenschaften.

Druckbeispiel I: (Stoffdruck)

Ein gewebtes Trikot aus Polyamid 6 oder 6.6 wird auf einer herkömmlichen Textildruckmaschine mit einer Paste bedruckt, die bezogen auf 1000 g Druckpaste enthält:

a) 20 g des Farbstoffes gemäss Tabellenbeispiel 6,
b) 50 g Harnstoff,
c) 50 g Thiodiäthylenglykol,
d) 320 g Wasser,
e) 500 g Kernmehl- oder Guarmehlderivat, 10%-ig und
f) 60 g Ammontartrat-Lösung 15°Bè.

Die bedruckte Ware wird im Trockenschrank bei 70 bis 80° getrocknet und dann zur Fixierung 20 bis 30 Minuten mit Sattdampf von 101 bis 103° gedämpft. Anschliessend wird die Ware 10 Minuten kalt gespült, 15 Minuten bei 50 bis 60° mit 2 g/l eines synthetischen Waschmittels gewaschen, erneut kalt gespült und dann getrocknet.
Man erhält einen gleichmässig und vollständig fixierten Druck in grünstichig-gelber Nuance, mit scharfen Konturen und guten Echtheiten.
Zur Beurteilung der Feinverteilung wird die Druckpaste in verdünnter Form aufgebracht. Das bedruckte Material erweist sich dabei als sprickelfrei.

Druckbeispiel II:(Teppichdruck)

Ein Tufting-Teppich aus Polyamid 6 und 6,6 wird auf einer herkömmlichen Flach- oder Rotationsteppichdruckmaschine mit einer Paste bedruckt, die pro kg Ware

a) 5 g des Farbstoffes gemäss Beispiel 1,
b) 350 g Wasser,
c) 400 g Kernmehl-oder Guarmehlderivat, 3,5%-ig,
d) 2 g eines Antifrostingpräparates auf der Basis von Alkylarylpolyglykoläthersulfat,
e) 0,5 g eines silikonfreien Entschäumungsmittels auf der Basis hochsiedender Alkohole,
enthält und mit Zitronensäure auf pH 3,5 gestellt wird.

Die bedruckte Ware wird 2 bis 3 Minuten im Sattdampfbereich gedämpft, dann gespült und getrocknet. Man erhält einen gleichmässig und vollständig fixierten Druck in grünstichig-gelber Nuance, mit scharfen Konturen und guten Echtheiten.

**Patentansprüche**

1. Monoazofarbstoffe der Formel

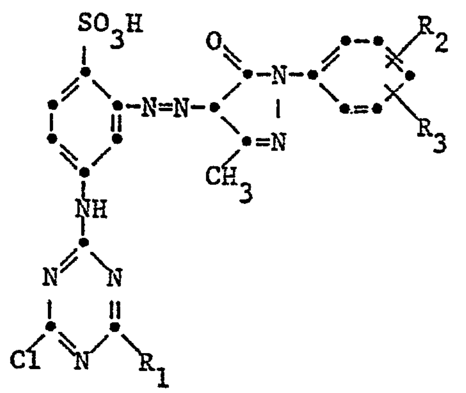

(1),

worin $R_1$ N-Aethylanilino oder durch $C_{2-5}$-Alkanoylamino substituiertes Anilino, $R_2$ Wasserstoff oder $C_{1-4}$-Alkyl und $R_3$ Halogen oder $C_{1-4}$-Alkyl ist.

2. Monoazofarbstoffe gemäss Anspruch 1, worin $R_1$ N-Aethylanilino ist.

3. Monoazofarbstoffe gemäss Anspruch 1, worin $R_1$ durch $C_{2-4}$-Alkanoylamino substituiertes Anilino ist.

4. Monoazofarbstoffe gemäss einem der Ansprüche 1 bis 3, worin $R_2$ Wasserstoff und $R_3$ Chlor, Methyl oder Aethyl ist.

5. Monoazofarbstoffe gemäss einem der Ansprüche 1 bis 3, worin $R_2$ Methyl und $R_3$ Chlor, Methyl oder Aethyl ist.

6. Monoazofarbstoffe gemäss einem der Ansprüche 1 bis 5 der Formel

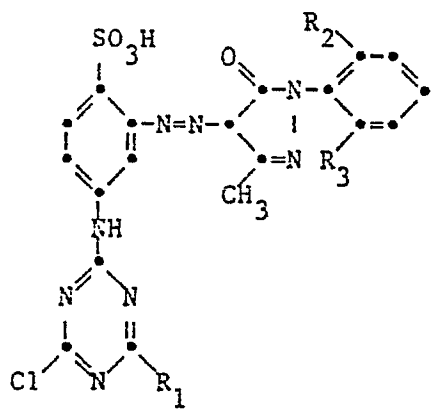

(2)

7. Monoazofarbstoffe gemäss Anspruch 6, worin $R_1$ N-Aethylanilino oder 4-Propionylaminoanilino, $R_2$ Wasserstoff oder Methyl und $R_3$ Chlor, Methyl oder Aethyl ist.

8. Monoazofarbstoff gemäss Anspruch 7 der Formel

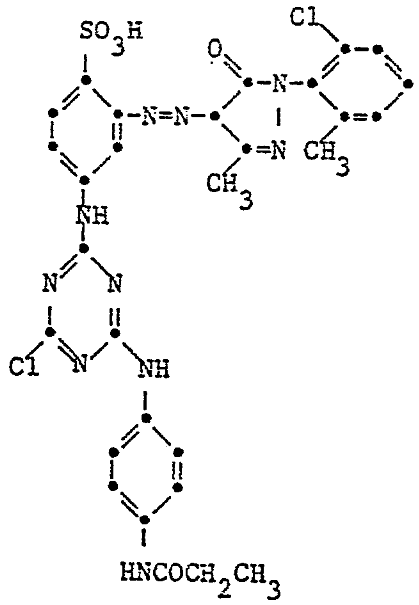

(3)

9. Monoazofarbstoff gemäss Anspruch 7 der Formel

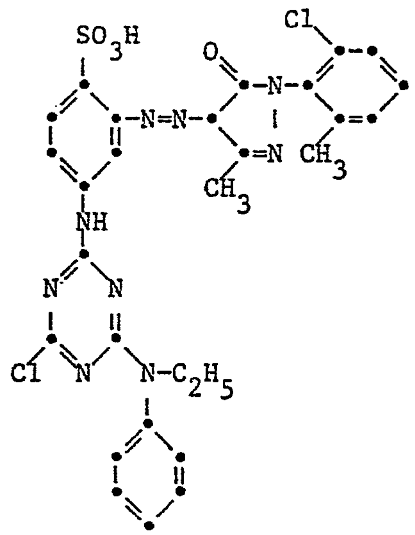

(4)

10. Verfahren zur Herstellung von Monoazofarbstoffen der Formel (1) gemäss Anspruch 1, dadurch gekennzeichnet, dass man in beliebiger Reihenfolge 2,4,6-Trichlor-1,3,5-triazin, ein Amin der Formel

$$H - R_1 \qquad (5),$$

1,3-Diaminobenzol-4-sulfonsäure und ein Pyrazolon der Formel

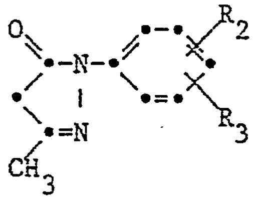

(6)

kondensiert, diazotiert und kuppelt, wobei die Symbole $R_1$, $R_2$ (1) und $R_3$ die in Anspruch 1 angegebenen Bedeutungen haben.

11. Verwendung der Monoazofarbstoffe gemäss den Ansprüchen 1 bis 9 bzw. der gemäss Anspruch 10 erhaltenen Monoazofarbstoffe zum Färben und Bedrucken

12. Verwendung gemäss Anspruch 11, zum Färben und Bedrucken von Wolle oder synthetischen Polyamidfasermaterialien.

13. Verwendung gemäss Anspruch 12, zum Färben und Bedrucken von synthetischen Polyamidfasermaterialien.

**Claims**

1. A monoazo dye of the formula

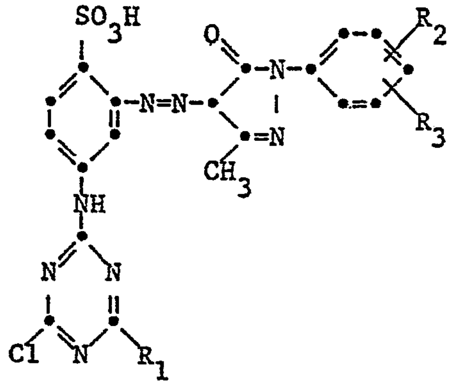

(1)

in which $R_1$ is N-ethylanilino or anilino which is substituted by $C_2$–$C_5$alkanoylamino, $R_2$ is hydrogen or $C_1$–$C_4$alkyl and $R_3$ is halogen or $C_1$–$C_4$alkyl.

2. A monoazo dye according to claim 1, in which $R_1$ is N-ethylanilino.

3. A monoazo dye according to claim 1, in which $R_1$ is anilino which is substituted by $C_2$–$C_4$alkanoylamino.

4. A monoazo dye according to any one of claims 1 to 3, in which $R_2$ is hydrogen and $R_3$ is chlorine, methyl or ethyl.

5. A monoazo dye according to any one of claims 1 to 3, in which $R_2$ is methyl and $R_3$ is chlorine, methyl or ethyl.

6. A monoazo dye according to any one of claims 1 to 5 of the formula

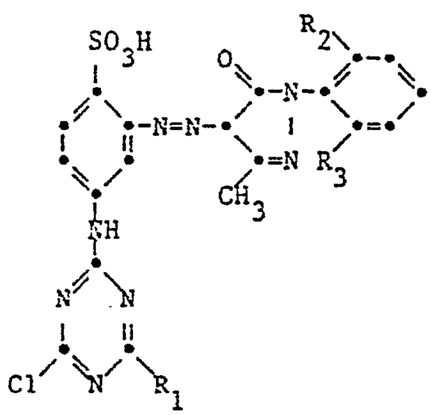

(2)

7. A monoazo dye according to claim 6, in which $R_1$ is N-ethylanilino or 4-propionylaminoanilino, $R_2$ is hydrogen or methyl and $R_3$ is chlorine, methyl or ethyl.

8. A monoazo dye according to claim 7 of the formula

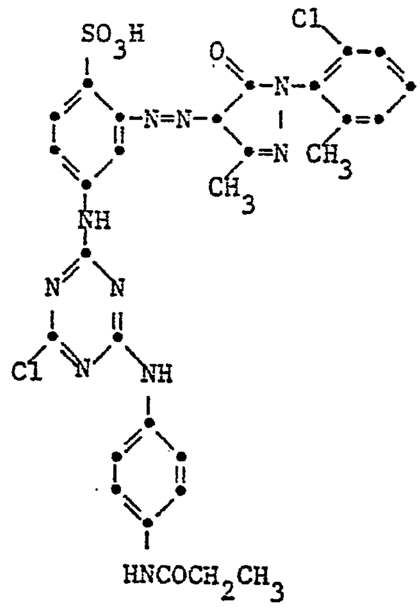

(3)

9. A monoazo dye according to claim 7 of the formula

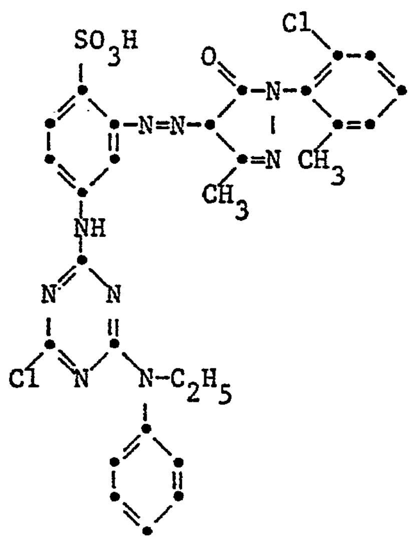

(4)

10. A process for the preparation of a monoazo dye of the formula (1) according to claim 1, which process comprises condensing, diazotising and coupling in any sequence 2,4,6-trichloro-1,3,5-triazine, an amine of the formula

$$H{-}R_1 \qquad (5),$$

1,3-diaminobenzene-4-sulfonic acid and a pyrazolone of the formula

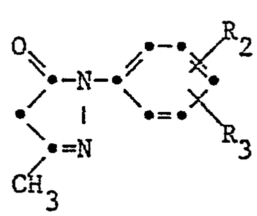

(6)

the symbols $R_1$, $R_2$ and $R_3$ being as defined in claim 1.

11. Use of a monoazo dye according to any one of claims 1 to 9 or of a monoazo dye obtained according to claim 10 for dyeing or printing.

12. Use according to claim 11 for dyeing or printing wool or synthetic polyamide fibre materials.

13. Use according to claim 12 for dyeing or printing synthetic polyamide fibre materials.

## Revendications

1. Colorants monoazoïques répondant à la formule:

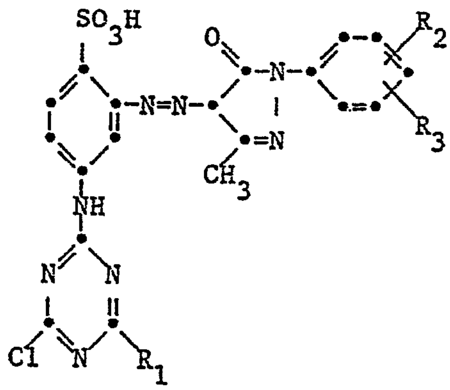

(1),

dans laquelle $R_1$ représente un N-éthylanilino ou un anilino substitué par un $C_{2-5}$-alcanoylamino, $R_2$ représente l'hydrogène ou un $C_{1-4}$-alkyle et $R_3$ représente un halogène ou un $C_{1-4}$-alkyle.

2. Colorants monoazoïques selon la revendication 1, dans lesquels $R_1$ représente un N-éthylanilino.

3. Colorants monoazoïques selon la revendication 1, dans lesquels $R_1$ représente un anilino substitué par un $C_{2-4}$-alcanoylamino.

4. Colorants monoazoïques selon l'une des revendications 1 à 3, dans lesquels $R_2$ représente l'hydrogène et $R_3$ représente le chlore, le méthyle ou l'éthyle.

5. Colorants monoazoïques selon l'une des revendications 1 à 3, dans lesquels $R_2$ représente le méthyle et $R_3$ représente le chlore, le méthyle ou l'éthyle.

6. Colorants monoazoïques selon l'une des revendications 1 à 5, répondant à la formule:

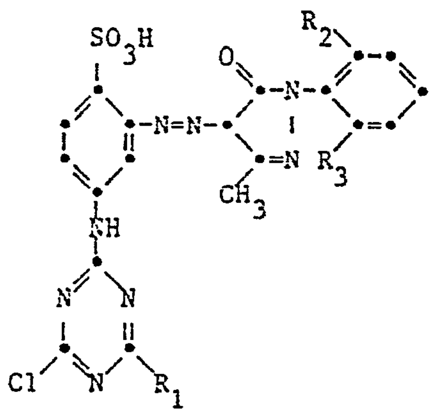

(2)

7. Colorants monoazoïques selon la revendication 6, dans lesquels $R_1$ représente un N-éthylanilino ou un 4-propionylaminoanilino, $R_2$ représente l'hydrogène ou le méthyle et $R_3$ représente le chlore, le méthyle ou l'éthyle.

8. Colorant monoazoïque selon la revendication 7, répondant à la formule:

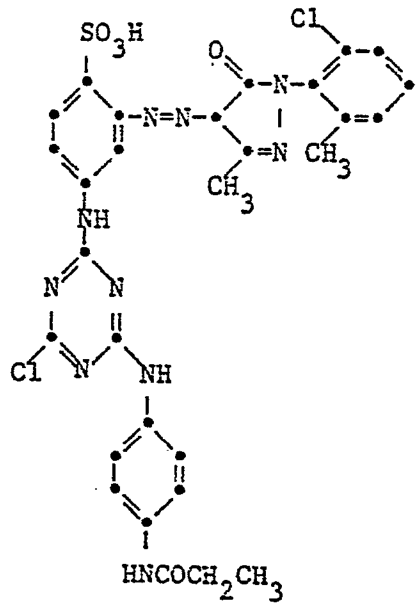

(3)

9. Colorant monoazoïque selon la revendication 7, répondant à la formule:

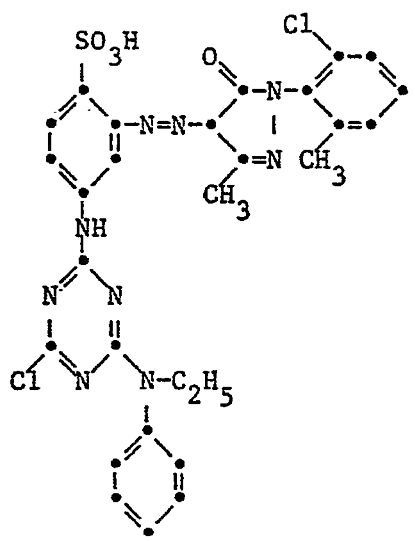

(4)

10. Procédé de préparation de colorants monoazoïques répondant à la formule (1) selon la revendication 1, caractérisé en ce que l'on condense, diazote et copule dans un ordre quelconque la 2,4,6-trichloro-1,3,5-triazine, une amine répondant à la formule

H–$R_1$ (5),

l'acide 1,3-diaminobenzène-4-sulfonique et une pyrazolone répondant à la formule

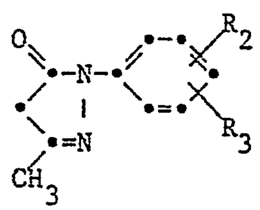

(6)

dans lesquels $R_1$, $R_2$ et $R_3$ ont les significations indiquées dans la revendication 1.

11. Utilisation des colorants monoazoïques selon les revendications 1 à 9 ou des colorants monoazoïques obtenus selon la revendication 10 pour la teinture et l'impression.

12. Utilisation selon la revendication 11 pour teindre et imprimer de la laine ou des matières synthétiques en fibres de polyamide.

13. Utilisation selon la revendication 12 pour teindre et imprimer des matières synthétiques en fibres de polyamide.